Europäisches Patentamt

(19) European Patent Office

Office européen des brevets

(11) Numéro de publication: **0 139 582**

**A1**

(12) **DEMANDE DE BREVET EUROPEEN**

(21) Numéro de dépôt: 84402001.6

(22) Date de dépôt: 05.10.84

(51) Int. Cl.⁴: **G 05 D 23/275**
**H 01 H 37/20, H 05 B 1/02**

(30) Priorité: 06.10.83 FR 8315910

(43) Date de publication de la demande:
02.05.85 Bulletin 85/18

(84) Etats contractants désignés:
AT CH DE FR GB IT LI SE

(71) Demandeur: EGO-FRANCE Société Anonyme
Route de Metz Saulny
F-57140 Woippy (Moselle)(FR)

(72) Inventeur: Andre, Jacques
8, rue Goussel François
F-57070 Metz (Moselle)(FR)

(72) Inventeur: Schmitt, Henri
57, rue Principale
F-57800 Bening-Les-St-Avold (Moselle)(FR)

(72) Inventeur: Speyer, Jean-Paul
Rue des Azalées
F-57157 Marly (Moselle)(FR)

(74) Mandataire: Chevallier, Robert Marie Georges
Cabinet BOETTCHER 23, rue La Boétie
F-75008 Paris(FR)

(54) Procédé de fabrication d'un themostat et thermostat obtenu.

㊗ Procédé de fabrication d'un thermostat et thermostat obtenu.

L'axe de commande (4) se visse et se dévisse dans un bossage (13) du corps (1) pour agir sur la capsule (8) au moment de l'étalonnage et le bouton de commande est calé en rotation sur l'axe (4) grâce à un méplat réalisé sur l'axe (4) en position d'étalonnage, ce qui permet l'interposition entre l'axe (4) et la capsule (8) d'un ressort (16) de protection permettant la dilatation due à toute surchauffe accidentelle ou prévisible ou au retour en arrière du bouton.

Fig.2

EP 0 139 582 A1

1

0139582

Procédé de fabrication d'un thermostat et thermostat obtenu.

L'invention a pour objet un procédé de fabrication d'un thermostat de régulation, par exemple à tube capillaire et à bulbe capteur rempli d'un liquide dont les variations du volume en fonction de la température agissent sur les parois déformables d'une capsule; l'une de ces parois agit à son tour sur une lame mobile d'un contact électrique par l'intermédiaire d'un ressort dit à échappement disposé pour basculer franchement d'une position à une autre; à ces positions correspondent les état d'ouverture et de fermeture du contact électrique.

La fabrication d'un tel thermostat nécessite son étalonnage c'est-à-dire un réglage portant sur la distance entre la capsule et le ressort afin que le changement de position de celui-ci, et par conséquent la manoeuvre du contact électrique, corresponde à une valeur prédéterminée de la température.

Un thermostat comprend un axe de commande sur lequel est fixé un bouton de manoeuvre. La position de ce dernier au moment de la fermeture ou de l'ouverture du contact électrique doit correspondre à une valeur de consigne lisible sur une plage graduée en degrés en face de laquelle le bouton est déplaçable, généralement par rotation de ce bouton et de l'axe de commande qui le porte.

Selon la technique classique de fabrication des thermostats l'axe qui recevra le bouton est d'abord immobilisé à une position puis on effectue l'étalonnage en agissant sur la position de la capsule par rapport au contact électrique pour que la manoeuvre de ce dernier corresponde à cette position du bouton. Il existe deux méthodes principales pour l'exécution de l'étalonnage. Selon une première méthode on modifie la position de la capsule par un déplacement en sens axial, sans rotation, soit de l'axe lui-même grâce à un écrou tournant immobilisé en translation dans lequel il est engagé, soit d'une vis qui se visse dans l'axe et qui le prolonge en sens axial.

Selon une seconde méthode, on déforme le bulbe en lui imposant un écrasement permanent localisé qui se traduit par une variation du volume de la capsule.

L'invention a pour but principal de parvenir à un procédé plus simple et plus rapide de l'étalonnage d'un thermostat, qui diminue le nombre de pièces de ce dernier et qui permette de rendre l'étalonnage non modifiable par la suite, ni volontairement, ni accidentellement.

L'invention a aussi pour but secondaire d'apporter un thermostat obtenu par le procédé ci-dessus dans lequel il est possible de protéger par un moyen simple la capsule contre le risque de détérioration résultant d'un échauffement excessif dépassant la plage normale des températures de fonctionnement.

A partir d'un thermostat comprenant un corps, une capsule ayant une première paroi agissant sur un contact électrique et une seconde paroi sur laquelle agit une extrémité d'un axe muni d'un bouton de commande, cet axe ayant une partie filetée, selon l'invention on ménage sur le corps un bossage taraudé en face de la seconde paroi de la capsule, de préférence en son centre, on effectue l'étalonnage en vissant plus ou moins directement l'axe dans le bossage taraudé et quand le changement d'état du contact électrique a lieu en face d'une valeur prédéterminée d'une plage graduée, on fait apparaître sur l'axe en face de cette valeur un moyen non modifiable de calage en rotation d'un bouton de commande, on munit le bouton d'un moyen complémentaire de calage en rotation et on le met en place sur l'axe en faisant coopérer les deux moyens de calage en rotation.

Tout moyen convenable de calage en rotation du bouton sur l'axe peut être adopté, par exemple une rainure longitudinale ou, inversement, une nervure longitudinale, exécutées directement sur la face extérieure de l'axe. On peut aussi fixer à l'axe de manière suffisamment résistante, par exemple par sertissage ou par collage, une pièce supplémentaire préalablement pourvue du moyen de calage en rotation auquel on donne l'orientation voulue.

Selon un mode préféré de mise en oeuvre de l'invention, on utilise comme axe un tube déformable par écrasement et on réalise le moyen de calage en rotation en écrasant ce tube entre deux mâchoires pour faire apparaître un méplat en face de la valeur prédéterminée de la température. On prévoit sur le bouton un trou ayant en section droite un profil correspondant permettant de l'enfiler sur la tige.

Avec le procédé de l'invention, particulièrement quand on emploie un axe cylindrique tubulaire, on peut facilement interposer un ressort de compression entre cet axe et la capsule; ce ressort est précontraint en compression à une valeur choisie au-dessus de laquelle il peut être comprimé davantage pour laisser se dilater la capsule quand le bulbe capteur est exposé à une température qui peut dépasser la valeur à laquelle le bouton est ramené en fin d'utilisation, comme c'est le cas avec les fours de cuisson ménagers, par exemple.

Quand l'axe est tubulaire, on introduit le ressort dans cet axe avant de faire apparaître le méplat en interposant une pastille d'appui si nécessaire entre ce ressort et la capsule, on met et on maintient le ressort en état de précontrainte par l'exécution même du méplat.

L'invention concerne aussi un thermostat dans lequel l'axe de montage du bouton de commande est vissé directement dans un bossage taraudé du corps contenant la capsule, de préférence coaxialement à celle-ci, et le bouton est calé en rotation sur cet axe à l'aide d'un moyen de calage en rotation auquel correspond sur le bouton un moyen complémentaire de calage.

Selon un mode de réalisation de ce thermostat, l'axe présente à partir de son extrémité proche de la capsule un logement ouvert en direction de cette dernière et contenant un ressort par l'intermédiaire duquel l'axe comprime la capsule.

Dans un exemple préféré de réalisation de l'invention, l'axe est un tube et le moyen de calage en rotation du bouton est un méplat réalisé par écrasement longitudinal de ce tube ; dans ce cas, le ressort est introduit dans le tube et une douille de compression est placée dans le tube entre le ressort et le début du méplat afin d'imposer une précontrainte de compression à ce ressort.

On donnera maintenant, sans intention limitative et sans exclure aucune variante, une description d'un exemple préféré de réalisation de l'invention. On se reportera au dessin annexé dans lequel :

- la figure 1 est une vue générale en perspective d'un thermostat pour chaudière réalisé conformément au procédé de l'invention,

- la figure 2 est une vue partielle agrandie du même thermostat en coupe par un plan passant par l'axe géométrique général.

Le thermostat décrit ici en exemple est destiné à une chaudière de chauffage central ; il comprend un corps 1 à partir duquel s'étend un tube capillaire 2 qui aboutit à un bulbe capteur 3 destiné à plonger dans un fluide dont la température est à maintenir constante. Du corps 1 sort un axe de commande 4 monté tournant autour d'un axe géométrique général 5 avec une amplitude angulaire limitée par une butée 6 à une valeur de 270° environ. Un doigt 7 monté sur l'axe 4 pour tourner avec lui rencontre la butée pour arrêter la rotation dans un sens et dans l'autre.

L'axe 4 est destiné à recevoir un bouton de commande (non représenté) qui se déplace devant une plage graduée (non représentée) pour être mis en face d'une valeur de consigne représentant la température que le thermostat doit maintenir constante.

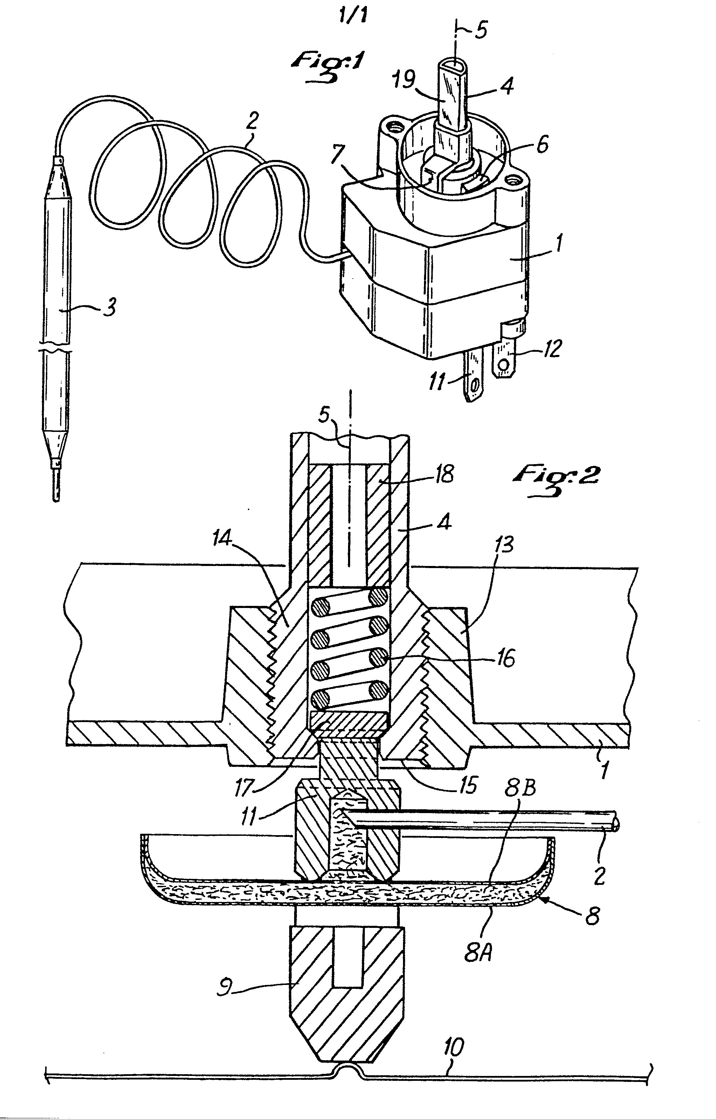

Le tube capillaire 2 aboutit (figure 2), à l'intérieur du corps 1, à une capsule 8 à parois déformables dont une paroi 8A agit par l'intermédiaire d'un doigt de commutation 9 en matière isolante électriquement sur un ressort à échappement 10 qui agit lui-même sur un contact électrique (non représenté) à partir duquel s'étendent en dehors du corps 1 deux bornes de raccordement 11, 12 (figure 1).

La paroi opposée 8B, à laquelle est fixé un raccord 11 de fixation du tube capillaire 2 est soumise à l'action de l'axe de commande 4. A cet effet, le corps 1 présente un bossage taraudé 13, coaxial à l'axe géométrique 5, dans lequel l'axe de commande 4 se visse, ou se dévisse, grâce à une partie extrême 14 renflée et filetée convenablement.

L'axe de commande 4 peut agir par sa face extrême 15, à l'intérieur du corps 1, directement sur le raccord 11 et par conséquent sur la paroi 8B.

Dans le présent exemple de réalisation, l'axe de commande 4 est un tube qui contient dans sa partie extrême un ressort intérieur 16 ; celui-ci est appliqué contre une pastille d'appui 17 qui est elle-même appliquée contre le raccord 11. Le ressort 16 est surmonté à son extrémité opposée d'une douille 18, en matière déformable, par exemple en polyamide, à l'aide de laquelle il est tenu en état de précontrainte de compression contre la pastille d'appui 17.

Le bouton de commande qui se monte sur l'axe 4 est calé en rotation sur celui-ci grâce à un méplat 19 (figure 1) qui est réalisé par écrasement localisé du tube. Cet écrasement est fait à partir de la partie extrême de la douille 18 éloignée du ressort 16; il permet de bloquer ce dernier et de le tenir ensuite en état de compression. Quand se produit une surchauffe du bulbe 3 ou un retour en arrière du bouton de commande, les parois opposées 8A, 8B de la capsule 8 peuvent soit s'écarter soit conserver leur écartement, la paroi 8B comprimant davantage le ressort 16.

Selon le procédé de l'invention, quand on utilise un axe de commande 4 se vissant dans un bossage 13 du corps 1 du thermostat, dans l'axe géométrique 5 de la capsule 8, on étalonne le thermostat en vissant ou en dévissant cet axe 4, puis en face de la valeur de consigne on fait apparaître sur l'axe un moyen de calage en rotation tel que le méplat 19 qui se réalise facilement, quand l'axe est un tube cylindrique, par écrasement entre des mâchoires appropriées. On prévoit dans le bouton de commande un trou ayant un profilé convenable pour pouvoir l'enfiler sans jeu en rotation sur l'axe 4 puis on l'immobilise en translation sur ce dernier, par exemple à l'aide d'une vis de blocage. Le méplat 19 sert aussi à caler en rotation le doigt 7 qui coopère avec la butée 6 pour limiter le débattement angulaire du bouton de commande.

Ainsi qu'on l'a dit, de nombreuses variantes sont possibles pour réaliser sur l'axe, dans le cadre du procédé de l'invention, le moyen de calage en rotation du bouton de commande, quand cet axe a été mis par vissage ou dévissage dans le corps 1, à sa position d'étalonnage. Il est possible, que l'axe cylindrique 4 soit tubulaire ou non, d'y percer un trou radial au lieu d'y faire apparaître le méplat 19 et de monter sur le bouton de commande une vis pointeau s'engageant dans ce trou. Toute opération d'usinage ou de déformation peut donc être employée.

Quand l'axe 4 n'est pas tubulaire, on peut ménager dans sa partie extrême 14 renflée et filetée, un trou borgne destiné à servir de logement au ressort 16.

Un thermostat conforme à l'invention comprend peu de pièces ; de ce fait, les causes de jeu interne sont moins nombreuses de sorte que la précision obtenue est meilleure que celle des thermostats classiques, en particulier l'écart entre l'ouverture et la fermeture du contact électrique est remarquablement faible.

REVENDICATIONS

1. Procédé de fabrication d'un thermostat comprenant un corps (1), une capsule (8) contenue dans ce corps, un axe de commande (4) agissant sur une paroi (8B) de la capsule (8), un bouton de commande se fixant sur l'axe de commande (4), caractérisé en ce qu'on prévoit sur le corps (1) un bossage taraudé (13) en face de la paroi (8B) de la capsule, on prévoit sur l'axe (4) une partie extrême filetée (14), on étalonne le thermostat en vissant et en dévissant directement l'axe (4) dans le bossage (13) et on réalise sur l'axe (4) un moyen de calage en rotation du bouton de commande que l'on munit d'un moyen complémentaire de calage en rotation.

2. Procédé selon la revendication 1, caractérisé en ce qu'on réalise le bossage taraudé (13) sur l'axe géométrique général de la capsule (8) et de l'axe de commande (4).

3. Procédé selon la revendication 1, caractérisé en ce qu'on réalise sur l'axe (4) le moyen de calage en rotation par une opération de déformation de cet axe.

4. Procédé selon la revendication 1, caractérisé en ce qu'on réalise sur l'axe (4) le moyen de calage en rotation par une opération d'usinage.

5. Procédé selon la revendication 1, caractérisé en ce qu'on réalise sur l'axe (4) le moyen de calage en rotation par une adjonction d'une pièce portant ce moyen de calage.

6. Procédé selon la revendication 3, caractérisé en ce qu'on emploie un axe cylindrique tubulaire (4) et on réalise sur cet axe un méplat (19) par écrasement entre des mâchoires appropriées.

7. Procédé selon la revendication 1, caractérisé en ce qu'on interpose entre l'axe (4) et la capsule (8) un ressort de compression (16) que l'on met en état de précontrainte de compression.

8. Thermostat comprenant un corps (1), une capsule (8) contenue dans ce corps, un axe de commande (4) agissant sur une paroi (8B) de la capsule (8), un bouton de commande fixé sur l'axe de commande (4), caractérisé en ce que le corps (1) a un bossage taraudé (13) en face de la capsule (8) et l'axe (4) a une partie extrême filetée (14) se vissant et se dévissant dans le bossage taraudé (13) pour agir sur la paroi (8B) de la capsule (8), le bouton de commande étant calé en rotation sur l'axe (4) par la coopération de moyens de calage complémentaires réalisés sur cet axe (4) et sur ce bouton.

9. Thermostat selon la revendication 8, caractérisé en ce que l'axe de commande (4) est cylindrique tubulaire, et le moyen de commande en rotation qu'il présente est un méplat (19) réalisé par écrasement localisé.

10. Thermostat selon la revendication 9, caractérisé en ce que l'axe de commande (4) contient dans sa partie extrême proche de la capsule (8) un ressort de compression (16), une douille (18) en matière déformable est disposé sur ce ressort (16) et le début du méplat (19) maintient la douille (18) en position de compression du ressort (16).

0139582

1/1

Fig:1

Fig:2

Office européen
des brevets

**RAPPORT DE RECHERCHE EUROPEENNE**

**0139582**
Numéro de la demande

EP  84 40 2001

## DOCUMENTS CONSIDERES COMME PERTINENTS

| Categorie | Citation du document avec indication, en cas de besoin, des parties pertinentes | Revendication concernée | CLASSEMENT DE LA DEMANDE (Int. Cl 4) |
|---|---|---|---|
| X | FR-A-1 281 785  (ROBERT SHAW-FULTON)<br>* page 2, colonne de droite, ligne 43 - page 3, colonne de gauche, ligne 17; figures 1,3 * | 1,2,8 | G 05 D  23/275<br>H 01 H  37/20<br>H 05 B   1/02 |
| Y |  | 3,7 | |
| | --- | | |
| Y | GB-A- 720 281  (BRITISH THERMOSTAT)<br>* page 2, lignes 17-47; figures 1,9 * | 3 | |
| | --- | | |
| Y | US-A-1 661 346  (C. SAWYER)<br>* page 1, lignes 71-90; figure 1 * | 7 | |
| | ----- | | DOMAINES TECHNIQUES RECHERCHES (Int Cl 4)<br><br>H 01 H<br>H 05 B<br>G 05 D |

Le présent rapport de recherche a été établi pour toutes les revendications

| Lieu de la recherche<br>LA HAYE | Date d'achèvement de la recherche<br>14-01-1985 | Examinateur<br>HELOT H.V. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82